# EUROPÄISCHE PATENTSCHRIFT

(11) **EP 4 185 496 B1**
(45) Veröffentlichungstag und Bekanntmachung des Hinweises auf die Patenterteilung: **26.06.2024**
(21) Anmeldenummer: 21743400.0
(22) Anmeldetag: 08.07.2021
(51) Int. Cl.: B60S 1/48, B60S 1/54, B60S 1/56, B08B 3/02, B08B 5/02

(54) **MEHRKANAL-REINIGUNGSVORRICHTUNG, MEHRKANAL-SENSORREINIGUNGSMODUL, FAHRZEUG**
MULTI-CHANNEL CLEANING DEVICE, MULTI-CHANNEL SENSOR CLEANING MODULE, VEHICLE
DISPOSITIF DE NETTOYAGE À CANAUX MULTIPLES, MODULE DE NETTOYAGE DE CAPTEUR À CANAUX MULTIPLES, VÉHICULE

(30) Priorität: 23.07.2020 DE 102020119475
(43) Veröffentlichungstag der Anmeldung: 31.05.2023
(73) Patentinhaber: ZF CV Systems Global GmbH, 3006 Bern (CH)
(72) Erfinder: RICKE, Janik, 31311 Uetze (DE)
(74) Vertreter: Ohlendorf, Henrike
(86) Internationale Anmeldenummer: PCT/EP2021/068926
(87) Internationale Veröffentlichungsnummer: WO 2022/017809

(56) Entgegenhaltungen:
- US-A1- 2018 015 907
- US-A1- 2018 251 099
- US-A1- 2019 275 990
- US-A1- 2020 001 832

## Beschreibung

Die Erfindung betrifft eine Mehrkanal-Reinigungsvorrichtung gemäß dem Oberbegriff des Anspruchs 1. Die Erfindung betrifft weiter ein Mehrkanal-Sensorreinigungsmodul gemäß dem Anspruch 11 und ein Fahrzeug gemäß dem Anspruch 12.

Reinigungsvorrichtungen für Fahrzeuge, insbesondere zum Reinigen einer Anzahl von Flächen, sind allgemein bekannt. Die US 2018/015907 A1 offenbart eine Mehrkanal-Reinigungsvorrichtung nach dem Oberbegriff des Anspruchs 1.

Die DE 101 10 490 A1 beschreibt eine Einrichtung zur Vorratssteuerung von Flüssigkeiten, bei der vorgesehen ist, dass der Flüssigkeitsvorrat in einem Arbeitsbehälter und mindestens einem den Arbeitsbehälter nachfüllend speisenden Vorratsbehälter aufgeteilt wird. Bei einem derartigen Ansatz entstehen aufgrund der Vielzahl von Einzelkomponenten relativ hohe Systemkosten. Derartige Ansätze sind weiter verbesserungswürdig, insbesondere was die zuverlässige Versorgung mehrerer Reinigungsdüsen betrifft, insbesondere zur Reinigung mehrerer Sensoren oder Kameras unter einem möglichst geringen apparativen Aufwand.

Wünschenswert ist es daher, die Funktion und den Aufbau der Reinigungsvorrichtung zu verbessern, insbesondere unter relativ geringem apparativen Aufwand eine Versorgung mehrerer Reinigungsdüsen zu ermöglichen.

An dieser Stelle setzt die Erfindung an deren Aufgabe es ist, eine verbesserte Reinigungsvorrichtung anzugeben, bei dem insbesondere eine Versorgung mehrerer Reinigungsdüsen unter relativ geringem apparativen Aufwand verbessert ermöglicht wird.

Die Aufgabe, betreffend die Reinigungsvorrichtung, wird durch die Erfindung in einem ersten Aspekt mit einer Mehrkanal-Reinigungsvorrichtung des Anspruchs 1 gelöst.

Die Erfindung geht aus von einer Mehrkanal-Reinigungsvorrichtung zum Bereitstellen von einer Flüssigkeitsströmung und/oder einer Druckluftströmung für eine Anzahl von Reinigungsdüsen, aufweisend:
- einen Moduldruckluftanschluss zum Annehmen von Druckluft,
- einen Modulflüssigkeitsanschluss zum Annehmen von Reinigungsflüssigkeit.

Erfindungsgemäß sind bei der Mehrkanal-Reinigungsvorrichtung mindestens zwei Düsenstränge vorgesehen, wobei ein Düsenstrang ausgebildet ist zum Versorgen mindestens einer Reinigungsdüse unabhängig von einem anderen Düsenstrang, wobei jeder Düsenstrang aufweist:
- eine Pumpe, ausgebildet zum Fördern einer Reinigungsflüssigkeit von einer am Modulflüssigkeitsanschluss, insbesondere drucklos, bereitgestellten Reinigungsflüssigkeit in Abhängigkeit eines Pumpensteuersignals und zum Bereitstellen der geförderten Reinigungsflüssigkeit in Form einer Flüssigkeitsströmung, insbesondere unter einem Förderdruck, an einer Flüssigkeits-Düsenleitung des Düsenstrangs,
- ein Strangventil, ausgebildet zum pneumatischen Verbinden des Moduldruckluftanschlusses mit einer Druckluft-Düsenleitung des Düsenstrangs in Abhängigkeit eines Ventilsteuersignals zum Bereitstellen einer Druckluftströmung an der Druckluft-Düsenleitung in einer Belüftungsstellung.

Die Erfindung geht aus von der Erkenntnis, dass eine Möglichkeit zur Versorgung mehrerer Reinigungsdüsen grundsätzlich vorteilhaft ist im Hinblick auf die gestiegenen Anforderungen an autonome und teilautonome Fahrfunktionen in einem Fahrzeug und die damit einhergehende gestiegene Anzahl an Sensoren, deren Reinigung wichtig ist für eine zuverlässige Funktion.

Hierbei hat die Erfindung überraschend erkannt, dass es, insbesondere hinsichtlich Kosten, Gewicht und/oder Ausfallanfälligkeit, vorteilhaft sein kann, für jeden Düsenstrang eine eigene Pumpe vorzusehen zur Fördern einer Reinigungsflüssigkeit und Bereitstellen in Form einer Flüssigkeitsströmung. Diese Erkenntnis ist insbesondere vor dem Hintergrund konventioneller, apparativ und kostenmäßig aufwändiger, Ansätze zu sehen, bei denen eine Anzahl von Reinigungsdüsen über eine relativ große zentrale Pumpe und eine Anzahl von hydraulischen und/oder fluidischen Ventilen geschaltet wird.

Dabei schließt die Erfindung die Erkenntnis ein, dass bei einem Fahrzeug hohe Anforderungen an ein leichtes Gewicht, geringen Bauraum und geringe Kosten herrschen. Auch schließt die Erfindung die Erkenntnis ein, dass eine Reinigungsvorrichtung einfach zu reparieren, zu warten und auch nachzurüsten sein sollte.

Durch eine zentrale Mehrkanal-Reinigungsvorrichtung kann vorteilhaft eine Anzahl von Düsensträngen zur jeweils unabhängigen Versorgung von Reinigungsdüsen vorgesehen werden. Hierdurch werden sämtliche wesentliche Komponenten, die zur geeigneten Bereitstellung von Reinigungsmedien, insbesondere von einer Flüssigkeitsströmung und einer Druckluftströmung, benötigt werden, in Form einer Mehrkanal-Reinigungsvorrichtung bereitgestellt. Eine derartige, zentrale Mehrkanal-Reinigungsvorrichtung ist somit gegenüber anderen Reinigungs-Architekturen, beispielsweise im Fahrzeug verteilten Pumpen zur Förderung von Reinigungsflüssigkeit, insbesondere dahingehend vorteilhaft, dass die Mehrkanal-Reinigungsvorrichtung als Einheit unter relativ geringem Aufwand eingebaut, gewartet, repariert und/oder nachgerüstet werden kann.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere weist ein Düsenstrang einen Flüssigkeits-Düsenanschluss und einen Druckluft-Düsenanschluss auf.

Im Rahmen einer bevorzugten Weiterbildung ist vorgesehen, dass die Pumpe als elektrische Pumpe, insbesondere als Waschwasserpumpe, ausgebildet ist. Insbesondere eine Waschwasserpumpe, die normalerweise in Fahrzeugen zum Fördern von Reinigungsflüssigkeit insbesondere für Scheibenwisch- und/oder Scheibenreinigungsanlagen eingesetzt wird, kann als kostengünstiges, insbesondere relativ kleines Gewicht und Abmaße sowie definierte mechanische und steuerungstechnische Schnittstellen aufweisendes und zuverlässiges Standardbauteil, als Pumpe in der Mehrkanal-Reinigungsvorrichtung eingesetzt werden.

Im Rahmen einer bevorzugten Weiterbildung ist vorgesehen, dass das Strangventil als 2/2-Wegeventil, insbesondere als 2/2-Wege-Magnetventil ausgebildet ist. Mit einem als 2/2-Wegeventil, insbesondere als 2/2-Wege-Magnetventil ausgebildeten Strangventil kann die Mehrkanal-Reinigungsvorrichtung in konstruktiv einfacher und kostengünstiger Weise realisiert werden.

Die Reinigungsflüssigkeit kann insbesondere Wasser, oder eine Mischung aus Wasser mit Reinigungsmittel und/oder mit Frostschutzmittel, sein.

In einer Weiterbildung mit als 2/2-Wegeventilen, insbesondere als 2/2-Wege-Magnetventilen, ausgebildeten Strangventilen wird die Pumpe eines Düsenstrangs bevorzugt über einen Pumpensteueranschluss, und das Strangventil unabhängig davon über einen Düsensteueranschluss gesteuert, insbesondere um die Druckluftströmung und die Flüssigkeitsströmung zeitlich unabhängig voneinander bereitstellen zu können. Insbesondere kann auf diese Weise eine Sensoroberfläche zuerst mit einer Flüssigkeitsströmung zum Aufweichen von, insbesondere getrockneten, Schmutzpartikeln, und im Anschluss mit einer Druckluftströmung zum Entfernen der aufgeweichten Schmutzpartikel beaufschlagt werden. Auch ist eine Wiederholung dieser Reihenfolge oder ein gleichzeitiges Beaufschlagen mit einer Flüssigkeitsströmung und einer Druckluftströmung oder andere, gleichzeitige oder nacheinander folgende, Sequenzen einer oder mehrerer Flüssigkeitsströmungen und einer oder mehrerer Druckluftströmungen möglich.

Im Rahmen einer bevorzugten Weiterbildung ist vorgesehen, dass das Strangventil als 3/2-Wegeventil, insbesondere als 3/2-Wege-Magnetventil ausgebildet ist, wobei das 3/2-Wegeventil einen Entlüftungsanschluss aufweist und ausgebildet ist zum Herstellen einer pneumatischen Verbindung zwischen der Druckluft-Düsenleitung des Düsenstrangs und dem Entlüftungsanschluss. In einer derartigen Weiterbildung wird insbesondere eine Entlüftung der Druckluft - Düsenleitung ermöglicht, insbesondere wenn in dieser Flüssigkeits-Düsenleitung Mittel zur Erzeugung eines Druckluft-Reinigungsimpulses vorgesehen sind.

Im Rahmen einer bevorzugten Weiterbildung ist vorgesehen, dass in der Druckluft-Düsenleitung des Düsenstrangs ein Schnellentlüftungsventil angeordnet ist, das ausgebildet ist zum Annehmen der Bypass-Druckluftströmung und zum Bereitstellen eines Druckluft-Reinigungsimpulses.

Im Rahmen einer bevorzugten Weiterbildung ist vorgesehen, dass sämtliche Düsenstränge der Mehrkanal-Reinigungsvorrichtung baugleich ausgebildet sind. Im Rahmen einer bevorzugten Weiterbildung ist vorgesehen, dass die Pumpen sämtlicher Düsenstränge der Mehrkanal-Reinigungsvorrichtung baugleich ausgebildet sind. Im Rahmen einer bevorzugten Weiterbildung ist vorgesehen, dass die Strangventile sämtlicher Düsenstränge der Mehrkanal-Reinigungsvorrichtung baugleich ausgebildet sind.

Im Rahmen einer bevorzugten Weiterbildung ist vorgesehen, dass in einem Düsenstrang die Pumpe einen Pumpensteueranschluss und/oder das Strangventil einen Ventilsteueranschluss aufweist, die insbesondere voneinander unabhängig steuerbar ausgebildet sind. Der Pumpensteueranschluss und/oder der Ventilsteueranschluss sind insbesondere jeweils signalführend mit einer Fahrzeugsteuerleitung verbindbar ausgebildet. Durch eine unabhängige Steuerbarkeit des Pumpensteueranschlusses und des Ventilsteueranschlusses können Reinigungsflüssigkeit und Druckluft vorteilhaft voneinander unabhängig bereitgestellt werden zum reinigenden Beaufschlagen auf die Sensoroberfläche. Insbesondere kann in vorteilhaft flüssigkeitssparender Weise eine Reinigung nur mit Druckluft, durch das alleinige Bereitstellen einer Druckluftströmung, erfolgen.

Bei Mehrkanal-Reinigungsvorrichtungen, die Düsenstränge mit Schnellentlüftungsventilen aufweisen, kann eine derartige Weiterbildung mit unabhängig voneinander steuerbaren Pumpensteueranschlüssen und Ventilsteueranschlüssen insbesondere ein Strangventil aufweisen, das als normal öffnendes Ventil, insbesondere als normal öffnendes 3/2-Wegeventil ausgebildet ist. "Normal öffnendes Ventil" bedeutet, dass sich das Ventil, hier das 3/2-Wegeventil, im nicht angesteuerten, insbesondere nicht bestromten, Zustand in seiner Belüftungsstellung befindet, und nur in seine - das Schnellentlüftungsventil an seinem zweiten Anschluss zur Abgabe des Druckluft-Reinigungsimpuls entlüftende - Entlüftungsstellung geschaltet wird, wenn ein Druckluft-Reinigungsimpuls bereitgestellt werden soll. Insbesondere ist das Schnellentlüftungsventil zwischen dem Strangventil und der Reinigungsdüse angeordnet. Auf diese Weise wird bei Weiterbildungen mit Schnellentlüftungsventilen vorteilhaft ein unnötiges Ansteuern, insbesondere Bestromen, des Strangventils über einen langen Zeitraum vermieden.

In Weiterbildungen ohne Schnellentlüftungsventilen kann das Strangventil bevorzugt als normal schließendes Ventil, insbesondere als normal schließendes 2/2-Wegeventil oder 3/2-Wegeventil, ausgebildet sein. "Normal schließendes Ventil" bedeutet entsprechend, dass sich das Ventil, insbesondere das 3/2-Wegeventil, im nicht angesteuerten, insbesondere nicht bestromten, Zustand in seiner Entlüftungsstellung befindet. Durch ein normal schließendes Strangventil wird somit vorteilhaft nur zum Bereitstellen einer Druckluftströmung angesteuert, insbesondere bestromt.

Im Rahmen einer bevorzugten Weiterbildung ist vorgesehen, dass die Pumpe und das Strangventil eines Düsenstrangs einen gemeinsamen Kombinations-Steueranschluss aufweisen, der einen Pumpensteueranschluss der Pumpe und einen Ventilsteueranschluss des Strangventils kombiniert und ausgebildet ist zum gemeinsamen Ansteuern der Pumpe und des Strangventils eines jeweiligen Düsenstrangs mit einem einzelnen Kombinations-Steuersignal. In einer derartigen Weiterbildung mit einem gemeinsamen Kombinations-Steueranschluss eines Düsenstrangs können vorteilhaft die Pumpe und das Strangventil eines Düsenstrangs simultan, insbesondere mit einer Steuerspannung, angesteuert werden. Eine derartige Weiterbildung ist insbesondere vorteilhaft bei Mehrkanal-Reinigungsvorrichtungen, die Düsenstränge mit Schnellentlüftungsventilen aufweisen: Bei einem Ansteuern, insbesondere dem Anlegen einer Steuerspannung, wird sowohl die Pumpe des Düsenstrangs zum Bereitstellen einer Flüssigkeitsströmung aktiviert, und gleichzeitig wird Druckluft durch ein Schalten des Strangventils in die Belüftungsstellung zum Füllen des Druckluftpuffers des Schnellentlüftungsventils bereitgestellt. Bei einem Wegfall der Ansteuerung, insbesondere einem Abfallen der Steuerspannung, wird das Bereitstellen der Flüssigkeitsströmung, und somit das Beaufschlagen einer Sensoroberfläche mit Reinigungsflüssigkeit, beendet, und gleichzeitig durch ein Schalten des Strangventils in die Entlüftungsstellung ein Druckluft-Reinigungsimpuls durch das Schnellentlüftungsventil zum impulsartigen Beaufschlagen der Sensoroberfläche mit Druckluft bereitgestellt. Auf diese Weise kann vorteilhaft eine Reinigung der Sensoroberfläche mit einer vereinfachten Steuerung umgesetzt werden.

Im Rahmen einer bevorzugten Weiterbildung ist eine Zentralpumpeinheit vorgesehen, in der die Pumpen mehrerer, insbesondere sämtlicher, Düsenstränge, insbesondere in einem Pumpenmodul eingehaust, angeordnet sind. In einer derartigen Weiterbildung kann die bauliche Integration der Mehrkanal-Reinigungsvorrichtung durch ein gemeinsames Anordnen der Pumpen in einem Pumpengehäuse weiter verbessert werden, insbesondere zum Erreichen eines verringerten Bauraums.

Im Rahmen einer bevorzugten Weiterbildung ist ein Modulsteueranschluss vorgesehen. Mittels eines Modulsteueranschlusses können die Pumpensteueranschlüsse und/oder die Ventilsteueranschlüsse und/oder die Kombinations-Steueranschlüsse vorteilhaft in Form einer, insbesondere standardisierten, Schnittstelle bereitgestellt werden, was insbesondere die Montage erleichtert.

Im Rahmen einer bevorzugten Weiterbildung ist eine Modulsteuereinheit vorgesehen, die ausgebildet ist zur Kommunikation zwischen der Mehrkanal-Reinigungsvorrichtung, insbesondere dem Modulsteueranschluss der Mehrkanal-Reinigungsvorrichtung, und einer Fahrzeugsteuereinheit des Fahrzeugs, insbesondere über einen Fahrzeugbus. Alternativ oder zusätzlich zu dem Modulsteueranschluss kann die Modulsteuereinheit auch signalführend mit Pumpensteueranschlüssen und/oder Ventilsteueranschlüssen verbunden sein.

Die Erfindung führt in einem zweiten Aspekt auf ein Mehrkanal-Sensorreinigungsmodul, aufweisend ein Modulgehäuse, insbesondere ein Ventilpatronengehäuse, und eine Mehrkanal-Reinigungsvorrichtung gemäß dem ersten Aspekt der Erfindung. Bei dem Mehrkanal-Sensorreinigungsmodul werden die Vorteile der Mehrkanal-Reinigungsvorrichtung entsprechend vorteilhaft genutzt. Insbesondere erlaubt die Integration der Mehrkanal-Reinigungsvorrichtung in Form eines abgeschlossenen Mehrkanal-Sensorreinigungsmoduls mit definierten Schnittstellen und/oder Anschlüssen eine verbesserte Integration in ein Fahrzeug, insbesondere unter relativ geringem Montageaufwand. Auch ermöglicht ein derartiges Mehrkanal-Sensorreinigungsmodul in verbesserter Weise eine Nachrüstung in bestehende Fahrzeuge. Das Modulgehäuse kann aus einem geeigneten Material, insbesondere einem eine ausreichende Festigkeit aufweisenden Kunststoff oder aus Aluminium, gebildet sein. Ein Ventilpatronengehäuse ist insbesondere aus Aluminium oder Kunststoff oder dergleichen geeigneten Material als ein Block gebildet, in den durch geeignete Bearbeitungsverfahren eine Anzahl von Ventileinsätzen eingebracht ist mit entsprechenden Bohrungen oder dergleichen luft- und/oder fluidführenden Leitungen zwischen den Ventileinsätzen und/oder externen Anschlüssen.

Die Erfindung führt in einem dritten Aspekt auf ein Fahrzeug, insbesondere einen PKW oder ein Nutzfahrzeug oder einen Anhänger, aufweisend mindestens eine Mehrkanal-Reinigungsvorrichtung gemäß dem ersten Aspekt der Erfindung und/oder ein Sensorreinigungsmodul gemäß dem zweiten Aspekt der Erfindung. In einem Fahrzeug gemäß dem dritten Aspekt der Erfindung können die Vorteile der Mehrkanal-Reinigungsvorrichtung gemäß dem ersten Aspekt der Erfindung und/oder ein Sensorreinigungsmodul gemäß dem zweiten Aspekt der Erfindung Vorteilhaft genutzt werden. Insbesondere ermöglicht eine zuverlässige Reinigung von Sensoroberflächen der Sensoren des Fahrzeugs durch eine verbesserte Mehrkanal-Reinigungsvorrichtung gemäß dem Konzept der Erfindung eine zuverlässigere Funktion von auf diesen Sensoren basierenden Fahrassistenz-Funktionen, autonomen Fahrfunktionen und/oder teilautonomen Fahrfunktionen des Fahrzeugs. Der Anhänger kann insbesondere als ein Nutzfahrzeug-Anhänger oder PKW-Anhänger ausgebildet sein.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: zeigt eine Mehrkanal-Reinigungsvorrichtung gemäß dem Konzept der Erfindung,
- Fig. 1A: beispielhaft ein als 2/2 Wegeventil ausgebildetes Strangventil,
- Fig. 2: eine schematische Darstellung eines Fahrzeugs aufweisend eine Mehrkanal-Reinigungsvorrichtung gemäß dem Konzept der Erfindung.

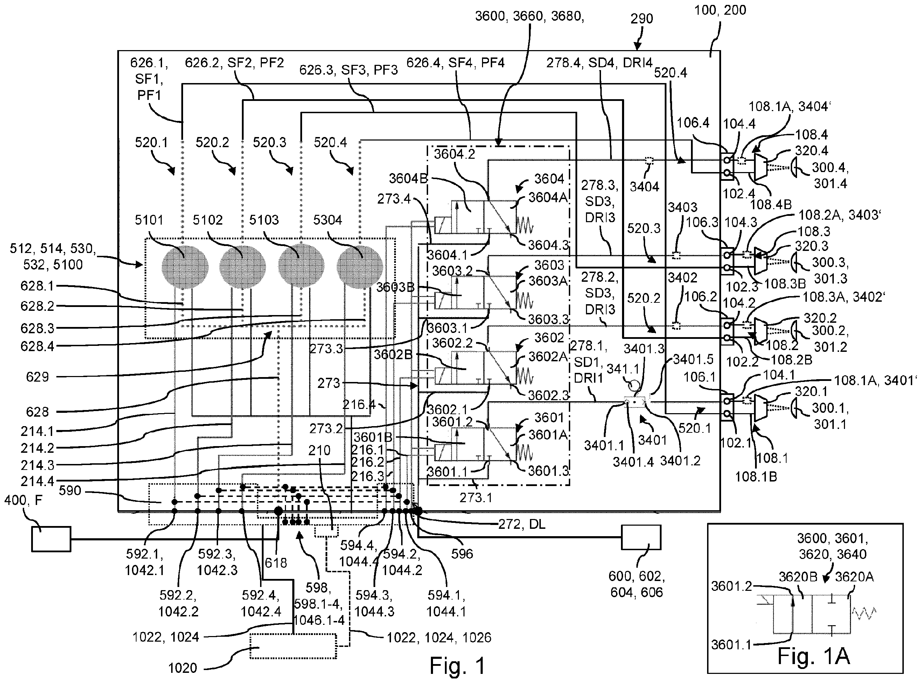

Fig. 1 zeigt eine Mehrkanal-Reinigungsvorrichtung 100 gemäß dem Konzept der Erfindung. Die Mehrkanal-Reinigungsvorrichtung 100 weist vorliegend vier Düsenstränge 520.1, 520.2, 520.3, 520.4 auf, wobei jeder Düsenstrang 520.1, 520.2, 520.3, 520.4 ausgebildet ist zum Bereitstellen einer Flüssigkeitsströmung SF1, SF2, SF3, SF4 und einer Druckluftströmung SD1, SD2, SD3, SD4 um reinigenden Beaufschlagen einer Sensoroberfläche 300.1, 300.2, 300.3, 300.4 eines Sensors 301.1, 301.2, 301.3, 301.4.

Die Mehrkanal-Reinigungsvorrichtung 100 weist einen Moduldruckluftanschluss 272 auf zum Bereitstellen von Druckluft DL von einer Druckluftquelle 600, insbesondere einem Kompressor 602 und/oder einem Druckluftspeicher 604 einer Druckluftversorgungsanlage 606.

Jeder Düsenstrang 520 weist eine Pumpe 5100 und ein Strangventil 3600 auf. Der erste Düsenstrang 520.1 weist eine erste Pumpe 5101 auf. Die erste Pumpe 5101 ist ausgebildet zum Fördern von Reinigungsflüssigkeit F, wobei die Reinigungsflüssigkeit F über einen Modulflüssigkeitsanschluss 618, insbesondere drucklos, bereitgestellt wird. Insbesondere ist der Modulflüssigkeitsanschluss 618 fluidführend mit einer Flüssigkeitsquelle 400, insbesondere einem Wassertank oder Waschmitteltank, verbunden. Insbesondere kann der Modulflüssigkeitsanschluss 618 mit einem Ansaugrüssel, der innerhalb des Wassertanks oder Waschmitteltanks, insbesondere auf dessen Boden, endet, fluidführend verbunden sein. Der Modulflüssigkeitsanschluss 618 ist innerhalb der Mehrkanal-Reinigungsvorrichtung 100 fluidführend mit einer Modulflüssigkeitsleitung 628 verbunden, welcher sich an einem Flüssigkeitsverteiler 629, entsprechend der Anzahl an Düsensträngen 520, vorliegend in einer erste Flüssigkeitsleitung 628.1, eine zweite Flüssigkeitsleitung 628.2, eine dritte Flüssigkeitsleitung 628.3 und eine vierte Flüssigkeitsleitung 628.4 aufteilt. Die erste Pumpe 5101 ist ausgebildet, Reinigungsflüssigkeit F über die erste Flüssigkeitsleitung 628.1 des ersten Düsenstrangs 520.1, die Modulflüssigkeitsleitung 628 und den Modulflüssigkeitsanschluss 618 anzusaugen, zu Fördern und, insbesondere unter einem ersten Förderdruck PF1, als erste Flüssigkeitsströmung SF1, an einer ersten Flüssigkeits-Düsenleitung 626.1 des ersten Düsenstrangs 520.1 bereitzustellen. Die erste Flüssigkeits-Düsenleitung 626.1 ist mit einem ersten Flüssigkeits-Düsenanschluss 102.1 des ersten Düsenstrangs 520.1 fluidführend verbunden.

Der Moduldruckluftanschluss 272 ist über eine Druckluft-Anschlussleitung 273 pneumatisch mit einer zum ersten Strangventil 3601 führenden ersten Druckluft-Anschlussleitung 273.1 des ersten Düsenstrangs 520.1, einer zum zweiten Strangventil 3602 führenden zweiten Druckluft-Anschlussleitung 273.2 des zweiten Düsenstrangs 520.2, einer zum dritten Strangventil 3603 führenden dritten Druckluft-Anschlussleitung 273.3 des dritten Düsenstrangs 520.3 und einer zum vierten Strangventil 3604 führenden vierten Druckluft-Anschlussleitung 273.4 des vierten Düsenstrangs 520.4 verbunden.

Die Pumpen 5100, insbesondere die Pumpen 5101, 5102, 5103, 5104 sämtlicher Düsenstränge 520.1, 520.2, 520.3, 520.4, können bevorzugt als elektrische Pumpen 512, besonders bevorzugt als Waschwasserpumpen 514 ausgebildet sein. Der Förderdruck PF kann insbesondere zwischen 1,2 bar und 3,0 bar, bevorzugt zwischen 1,8 und 2,6 bar, besonders bevorzugt 2,2 oder 2,5 bar, betragen. Die Pumpen 5100, insbesondere die Pumpen 5101, 5102, 5103, 5104 sämtlicher Düsenstränge 520.1, 520.2, 520.3, 520.4, können bevorzugt gemeinsam in einer Zentralpumpeinheit 530 angeordnet sein und/oder gemeinsam in einem Pumpenmodul 532 eingehaust sein.

Im Folgenden ist die Funktionsweise beispielhaft für den ersten Düsenstrang 520.1 beschrieben, gleiches trifft jedoch genauso auf die übrigen Düsenstränge 520, insbesondere den zweiten Düsenstrang 520.2, den dritten Düsenstrang 520.3 und den vierten Düsenstrang 520.4 zu.

Die erste Pumpe 5101 ist über eine erste Pumpensteuerleitung 214.1 des ersten Düsenstrangs 520.1 mit einem ersten Pumpensteueranschluss 592.1 des ersten Düsenstrangs 520.1 zum Annehmen eines ersten Pumpensteuersignals 1042.1 signalführend verbunden. In Abhängigkeit des ersten Pumpensteuersignals 1042.1 kann die Leistung der ersten Pumpe 5101 selektiv eingestellt, insbesondere ein- oder ausgeschaltet werden. Das erste Pumpensteuersignal 1042.1 kann insbesondere als eine Steuerspannung ausgebildet sein.

Der erste Düsenstrang 520.1 weist weiterhin ein erstes Strangventil 3601 auf, welches ausgebildet ist zum selektiven Bereitstellen einer ersten Druckluftströmung SD1 an einer ersten Druckluft-Düsenleitung 278.1 des ersten Düsenstrangs 520.1. Die erste Druckluft-Düsenleitung 278.1 ist pneumatisch mit einem ersten Druckluft-Düsenanschluss 104.1 des ersten Düsenstrangs 520.1 verbunden.

Das erste Strangventil 3601 ist bevorzugt als 3/2-Wegeventil 3660, besonders bevorzugt als 3/2-Wege-Magnetventil 3680, ausgebildet.

Das erste Strangventil 3601 ist mittels einer ersten Ventilsteuerleitung 216.1 signalführend mit einem ersten Ventilsteueranschluss 594.1 zum Empfangen eines ersten Ventilsteuersignals 1044.1 verbunden.

Das erste Strangventil 3601 ist ausgebildet, in einer ersten Entlüftungsstellung 3601A einen, pneumatisch über eine erste Druckluft-Anschlussleitung 273.1 mit dem Moduldruckluftanschluss 272 verbundenen, ersten Anschluss 3601.1 zu sperren, und einen pneumatisch mit der ersten Düsen-Druckluftleitung 278.1 verbundenen zweiten Anschluss 3601.2 mit einem dritten, insbesondere in die Umgebung entlüftenden, Entlüftungsanschluss 3601.3 zu verbinden.

Das erste Strangventil 3601 ist ausgebildet, in einer zweiten Belüftungsstellung 3601B den Entlüftungsanschluss 3601.3 zu sperren und den ersten Anschluss 3601.1 pneumatisch mit dem zweiten Anschluss 3601.2 des ersten Strangventils 3601 zu verbinden. In der Belüftungsstellung 3601B wird somit der Moduldruckluftanschluss 272 mit der ersten Druckluft-Düsenleitung 278.1, zum Bereitstellen einer ersten Druckluftströmung SD1 am ersten Druckluft-Düsenanschluss 104.1, pneumatisch verbunden.

Über den ersten Flüssigkeits-Düsenanschluss 102.1 und den ersten Druckluft-Düsenanschluss 104.1 des ersten Düsenstrangs 520.1 können eine oder mehrere Reinigungsdüsen 320, insbesondere eine erste Reinigungsdüse 320.1, angeschlossen werden, um die vom ersten Düsenstrang 520.1 bereitgestellte erste Flüssigkeitsströmung SF1 und/oder erste Druckluftströmung SD1 auf eine erste Sensoroberfläche 300.1 eines ersten Sensors 301.1 zwecks Reinigung zu leiten.

Die Mehrkanal-Reinigungsvorrichtung 100 kann in einem oder mehreren Düsensträngen 520 eine Düsenanschlussleitung 108 aufweisen, die ausgebildet ist zum luft- und/oder fluidführenden Verbinden einer oder mehrerer Reinigungsdüsen 320 mit der Mehrkanal-Reinigungsvorrichtung 100. Die Düsenanschlussleitung 108 kann als eine gemeinsame Leitung ausgebildet sein, die ausgebildet ist zum gleichzeitigen und/oder nacheinander folgenden Führen von sowohl Druckluft als auch Reinigungsflüssigkeit. In anderen bevorzugten Ausführungsformen kann die Düsenanschlussleitung 108 eine Flüssigkeits-Düsenanschlussleitung 108.1 und eine Druckluft-Düsenanschlussleitung 108.2 aufweisen und somit ausgebildet sein zum getrennten Führen der Medien zur Reinigungsdüse 320. Beispielsweise weist der erste Düsenstrang 520.1 eine erste Düsenanschlussleitung 108 mit einer ersten Flüssigkeits-Düsenanschlussleitung 108.1B und einer ersten Druckluft-Düsenanschlussleitung 108.1A auf.

Der erste Flüssigkeits-Düsenanschluss 102.1 und der erste Druckluft-Düsenanschluss 104.1 des ersten Düsenstrangs 520.1 können zu einem ersten Kombinations-Düsenanschluss 106.1 zusammengefasst werden, der insbesondere ein getrenntes Führen beider Medien, jedoch einen gemeinsamen mechanischen Anschluss, insbesondere durch Einschrauben, Einrasten oder Aufsetzen, der ersten Reinigungsdüse 320.1 oder einer ersten Düsenanschlussleitung 108.1 auf die Mehrkanal-Reinigungsvorrichtung 100 und/oder ein Mehrkanal-Sensorreinigungsmodul 200 ermöglicht.

In Weiterbildungen, in denen wie hier gezeigt das erste Strangventil 3601 als 3/2-Wegeventil 3660, insbesondere als 3/2-Wege-Magnetventil 3680, ausgebildet ist, kann optional weiterbildend in der Druckluft-Düsenleitung 278.1 ein erstes Schnellentlüftungsventil 3401 angeordnet sein, das ausgebildet ist zum Annehmen der ersten Druckluftströmung SD1 und zum Bereitstellen eines ersten Druckluft-Reinigungsimpulses DRI1.

Das Schnellentlüftungsventil 3401 weist einen ersten Anschluss 3401.1 auf, welcher das Schnellentlüftungsventil 3400 mit dem einem zweiten Anschluss 3601.2 des ersten Strangventils 3601 pneumatisch verbindet. Das erste Schnellentlüftungsventil 3401 weist einen zweiten Anschluss 3401.2 auf, welcher das Schnellentlüftungsventil 3400 über die erste Druckluft-Düsenleitung 278.1 mit dem ersten Druckluft-Düsenanschluss 104.1 pneumatisch verbindet. Das Schnellentlüftungsventil 3400 weist weiter einen dritten Anschluss 3400.3 auf, an den ein erster Druckluftpuffer 341.1 des ersten Schnellentlüftungsventils 3401 pneumatisch angeschlossen ist. Das erste Schnellentlüftungsventil 3401 ist in der Weise eines Auswahlventils gebildet mit einem ersten Ventilkörper 3401.4, welcher von dem ersten Anschluss 3401.1 und dem zweiten Anschluss 3401.2 denjenigen sperrt, an dem der schwächere Luftdruck anliegt und den jeweils anderen Anschluss pneumatisch mit dem dritten Anschluss 3401.3 verbindet.

Wenn in einer Ausführungsform mit einem Schnellentlüftungsventil 3401 das erste Strangventil 3601 in die Belüftungsstellung 3601B geschaltet wird, hat dies zur Folge, dass am Moduldruckluftanschluss 272 anliegende Druckluft DL in Form der Druckluftströmung SD an den ersten Anschluss 3401.1 des ersten Schnellentlüftungsventils 3401 weitergeleitet wird, wodurch der erste Ventilkörper 3401.4 sperrend gegen den zweiten Anschluss 3401.2 gedrückt wird und über den dritten Anschluss 3401.3 der erste Druckluftpuffer 341.1 mit Druckluft DL gefüllt wird. Wenn nun das Strangventil 3601 in die Entlüftungsstellung 3601A geschaltet wird, wird der zweite Anschluss 3601.2 des ersten Strangventils 3601 pneumatisch mit dem Entlüftungsanschluss 3601.3 verbunden und der erste Anschluss 3601.1 gesperrt. Als Folge dessen fällt der Luftdruck am ersten Anschluss 3401.1 des Schnellentlüftungsventils auf einen Umgehungsdruck ab und der erste Ventilkörper 3401.4 wird, insbesondere durch eine erste Schnellentlüftungsventil-Steuerleitung 3401.5, durch den Druck der im ersten Druckluftpuffer 341.1 gespeicherten Druckluft DL sperrend gegen den ersten Anschluss 3401.1 des ersten Schnellentlüftungsventils 3401 gedrückt. Folglich ist der zweite Anschluss 3401.2 des ersten Schnellentlüftungsventils 3401 geöffnet, wodurch die im ersten Druckluftpuffer 341.1 gespeicherte Druckluft DL in Form des ersten Druckluft-Reinigungsimpulses DRI1 über den zweiten Anschluss 3401.2 des ersten Schnellentlüftungsventils 3401 und die erste Druckluft-Düsenleitung 278.1 am ersten Düsen-Druckluftanschluss 104.1 bereitgestellt werden kann.

In Ausführungsformen mit einem ersten Schnellentlüftungsventil 3401 ist das erste Strangventil 3601 insbesondere als normal öffnend, das heißt sich in einem nicht angesteuerten, insbesondere nicht bestromten, Zustand in der Belüftungsstellung 3601B befindend, ausgebildet. Auf diese Weise wird der erste Druckluftpuffer 341.1 im nicht angesteuerten Zustand des ersten Strangventils 3601 stets mit Druckluft DL vom Moduldruckluftanschluss 272 beaufschlagt, es findet dabei jedoch durch die Sperrung des ersten Ventilkörpers 3401.4 keine Weiterleitung an den ersten Druckluft-Düsenanschluss 104.1 statt. Nur wenn das erste Strangventil 3601 durch Ansteuerung in die Entlüftungsstellung 3601A schaltet, wird durch die oben beschriebene Funktionsweise des Schnellentlüftungsventils 3401 ein erster Druckluft-Reinigungsimpuls DRI1 am ersten Druckluft-Düsenanschluss 104.1 bereitgestellt.

Hinsichtlich möglichst geringer Druckverluste und dadurch eines möglichst starken Bypass-Druckluft-Reinigungsimpulses BDRI ist es vorteilhaft, die Leitungslänge zwischen dem Schnellentlüftungsventil 3401 und der Reinigungsdüse 320 möglichst kurz zu halten. In alternativen bevorzugten Ausführungsformen kann statt des gezeigten ersten Schnellentlüftungsventils 3401 ein alternatives, hier stark vereinfacht dargestelltes, weiteres erstes Schnellentlüftungsventil 3401' näher an der Reinigungsdüse 320 angeordnet werden, beispielsweise zwischen dem ersten Druckluft-Düsenanschluss 104 und der ersten Reinigungsdüse 320 in der ersten Düsenanschlussleitung 108, insbesondere in der ersten Druckluft-Düsenanschlussleitung 108.1A. Die erste Reinigungsdüse 3201, die erste Düsenanschlussleitung 108 und das erste Schnellentlüftungsventil 340 können dabei insbesondere als Teil der Mehrkanal-Reinigungsvorrichtung 100 gebildet sein.

Wie in Fig. 1A gezeigt, können in alternativen Ausführungsformen der Erfindung die Strangventile 3600, hier beispielhaft das erste Strangventil 3601, auch als 2/2 Wegeventil 3620, insbesondere als 2/2-Wege-Magnetventil 3640, ausgebildet sein. In derartigen Ausführungsformen weist das erste Strangventil 3601 keinen Entlüftungsanschluss 3601.3 auf, sodass das erste Strangventil 3601 in diesen Fällen ausgebildet ist, den ersten Anschluss 3601.1 und den zweiten Anschluss 3601.2 in der Belüftungsstellung 3601B, insbesondere einer Öffnungsstellung 3620B des 2/2-Wegeventils 3620, pneumatisch zu verbinden, und in der Entlüftungsstellung, insbesondere einer Sperrstellung 3620A des 2/2-Wegeventils 3620, 3601A pneumatisch zu trennen. In Ausführungsformen, in denen das erste Strangventil 3601 als 2/2-Wegeventil 3620 ausgebildet ist, ist das erste Strangventil 3601 bevorzugt als normal schließendes Ventil ausgebildet, das heißt sich das Strangventil 3601 im nicht angesteuerten, insbesondere nicht bestromten bzw. stromlosen Zustand, in seiner Sperrstellung 3620A, und im angesteuerten, insbesondere im bestromten Zustand, zur Bereitstellung einer Druckluftströmung SD in seiner Öffnungsstellung 3620B befindet.

Der erste Pumpensteueranschluss 592.1 und der erste Ventilsteueranschluss 594.1 des ersten Düsenstranges 520.1 können - wie in Fig. 1 zur Verdeutlichung nur für den ersten Düsenstrang 520.1 explizit gezeigt, aber für alle Düsenstränge 520.1-4 möglich - insbesondere in Form eines gemeinsamen Kombination-Steueranschlusses 598.1 kombiniert werden, insbesondere zum gemeinsamen Ansteuern der ersten Pumpe 5101 und des ersten Strangventils 3601 des ersten Düsenstrang mittels eines ersten Kombinations-Steuersignals 1046.1.

Die gesamten vorhergehenden, detailliert für den ersten Düsenstrang 520.1 gemachten Ausführungen gelten für weitere Düsenstränge 520, insbesondere die hier entsprechend nummerierten Komponenten des zweiten Düsenstrangs 520.2, des dritten Düsenstrangs 520.3 und des vierten Düsenstrangs 520.4, in analoger Weise.

In bevorzugten Ausführungsformen können sämtliche Düsenstränge der Mehrkanal-Reinigungsvorrichtung 100 gleich ausgebildet sein. Gleichwohl können jedoch unterschiedlich ausgebildete Düsenstränge im Rahmen der Erfindung in einer Mehrkanal-Reinigungsvorrichtung 100 vorgesehen werden.

Die Mehrkanal-Reinigungsvorrichtung 100 kann einen Modulsteueranschluss 590 aufweisen, der insbesondere die Pumpensteueranschlüsse 592.1, 592.2, 592.3, 592.4 und die Ventilsteueranschlüsse 594.1, 594.2, 594.3, 594.4 in kombinierter Weise, insbesondere in Form eines einheitlichen Steckers oder einer nebeneinander angeordneten Reihe von Einzelsteckern, bereitstellt. Über einen Modulsteueranschluss 590 kann die Mehrkanal-Reinigungsvorrichtung 100 signalführend mit einer Fahrzeugsteuereinheit 1020 zum Austauschen von Steuersignalen 1022, insbesondere über eine Fahrzeugsteuerleitung 1024, verbunden werden.

Alternativ oder zusätzlich kann die Mehrkanal-Reinigungsvorrichtung 100 eine Modulsteuereinheit 210 aufweisen, die insbesondere über eine - als ein Fahrzeugbus 1026 ausgebildete - Fahrzeugsteuerleitung 1024 signalführend mit der Fahrzeugsteuereinheit 1020 des Fahrzeugs 1000 verbindbar ausgebildet ist. Die Modulsteuereinheit 210 dient insbesondere als Schnittstelle zwischen der Reinigungsvorrichtung 100 - insbesondere Pumpensteueranschlüssen 592.1, 592.2, 592.3, 592.4 und/oder Ventilsteueranschlüssen 594.1, 594.2, 594.3, 594.4 und/oder dem Modulsteueranschluss 590 - und der Fahrzeugsteuereinheit 1020 und ermöglicht eine signalführende Kommunikation über den Fahrzeugbus 1026 in einem geeigneten Protokoll, insbesondere CAN. Insbesondere ist der Fahrzeugbus 1026 des Fahrzeugs 1000 als CAN-Bus ausgebildet.

Der Modulsteueranschluss 590 kann, insbesondere im Rahmen der elektrischen Versorgung und/oder Ansteuerung, weiter einen Masseanschluss 596 aufweisen, insbesondere einen gemeinsamen Masseanschluss 596 für sämtliche Pumpen 5101, 5102, 5103, 5104 und Strangventile 3601, 3602, 3603, 3604 der Mehrkanal-Reinigungsvorrichtung 100.

Die in Fig. 1 gezeigte Mehrkanal-Reinigungsvorrichtung 100 kann zur Bildung eines Mehrkanal-Sensorreinigungsmoduls 200 von einem Modulgehäuse 290 eingehaust angeordnet sein. Das Modulgehäuse 290 kann aus einem geeigneten Material, insbesondere einem eine ausreichende Festigkeit aufweisenden Kunststoff oder aus Aluminium, gebildet sein.

Ein optionales zweites Schnellentlüftungsventil 3402, ein optionales drittes Schnellentlüftungsventil 3403 und ein optionales viertes Schnellentlüftungsventil 3404 sind in Fig. 1 lediglich stark vereinfacht dargestellt; es gelten diesbezüglich die zum ersten Schnellentlüftungsventil 3401 gemachten Ausführungen, insbesondere mit analog nummerierten Bezugszeichen.

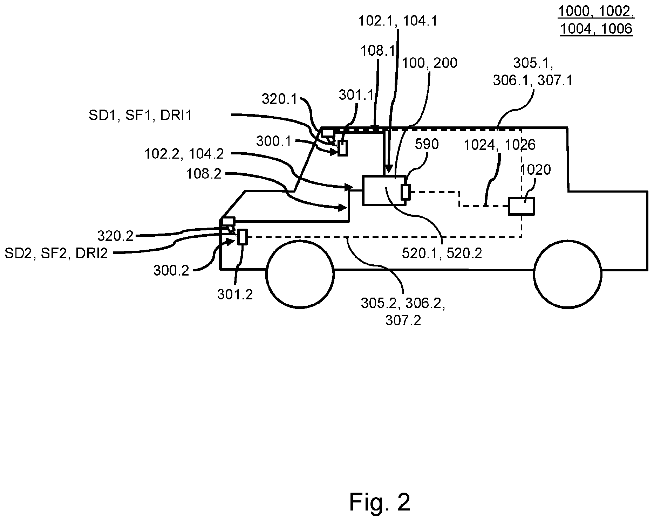

Fig. 2 zeigt eine schematische Darstellung eines Fahrzeugs 1000, insbesondere eines PKW 1002 oder Nutzfahrzeugs 1004 - vorliegend in Form eines autonomen oder teilautonomen Fahrzeugs - aufweisend eine Mehrkanal-Reinigungsvorrichtung 100 mit einer Anzahl von Düsensträngen 520 für eine Anzahl von mindestens zwei Reinigungsdüsen 320, vorliegend mit einem ersten Düsenstrang 520.1 für eine erste Reinigungsdüse 320.1 zum Reinigen einer ersten Sensoroberfläche 300.1 eines als optischen Sensor, beispielsweise als Kamera, ausgebildeten ersten Sensors 301.1 und mit einem zweiten Düsenstrang 520.2 für eine zweite Reinigungsdüse 320.2 zum Reinigen einer zweiten Sensoroberfläche 300.2 eines als optischen Sensor, beispielsweise als Kamera, ausgebildeten zweiten Sensors 301.2. Gleichwohl ist ein Einsatz der Mehrkanal-Reinigungsvorrichtung 100 in anderen Fahrzeugen möglich.

Die Mehrkanal-Reinigungsvorrichtung 100 ist insbesondere als ein Sensorreinigungsmodul 200 ausgebildet. Die Reinigungsvorrichtung 100 weist einen Modulsteueranschluss 590 auf, welcher mit einer Fahrzeugsteuereinheit 1020 über eine Fahrzeugsteuerleitung 1024 signalführend verbunden ist. Die Fahrzeugsteuerleitung 1024 ist insbesondere als ein Fahrzeugbus 1026, insbesondere CAN-Bus, ausgebildet.

Der erste Sensor 301.1 ist über eine erste Sensorleitung 306.1 mit der Fahrzeugsteuereinheit 1020 signalführend zur Übermittlung von ersten Sensorsignalen 305.1 verbunden. Insbesondere kann ein erstes Reinigungsprüfsignal 307.1 zum Feststellen, ob ein erster Flüssigkeits-Reinigungsimpuls FRI1 abgegeben wurde, über die erste Sensorleitung 306.1 an die Fahrzeugsteuereinheit 1020 übermittelt werden. In analoger Weise ist der zweite Sensor 301.2 über eine zweite Sensorleitung 106.2 mit der Fahrzeugsteuereinheit 1020 signalführend zur Übermittlung von zweiten Sensorsignalen 305.2, insbesondere eines zweiten Reinigungsprüfsignals 307.2, verbunden.

Ein Reinigungsprüfsignal 307.1, 307.2 kann bei einem als Kamera ausgebildeten Sensor 301.1, 301.2 insbesondere mit Mitteln der Bilderkennung generiert werden, beispielsweise durch das Feststellen von Flüssigkeitspartikeln im Kamerabild. Alternativ oder zusätzlich kann ein Reinigungsprüfsignal 307.1, 307.2 generiert werden, indem eine Stromaufnahme der Pumpe und/oder des Strangventils des jeweiligen Düsenstrangs ausgewertet wird.

Die Reinigungsdüsen 320.1, 320.2 sind zum Beaufschlagen der jeweiligen Sensoroberfläche 300.1, 300.2 mit einer Flüssigkeitsströmung SF1, SF2 und/oder einer Druckluftströmung SD1, SD2 und/oder einem Druckluft-Reinigungsimpuls DRI1, DRI2 ausgebildet.

Jede Reinigungsdüse 320.1, 320.2 ist jeweils über einen Düsen-Flüssigkeitsanschluss 102.1, 102.2 und einen Düsen-Druckluftanschluss 104.1, 104.2 fluidführend mit der Mehrkanal-Reinigungsvorrichtung 100 verbunden. In Ausführungsformen, in denen die Reinigungsdüse 320 nicht direkt an der Reinigungsvorrichtung 100 oder dem Sensorreinigungsmodul 200 angeordnet ist, kann die Reinigungsdüse 320 über eine Düsenanschlussleitung 108.1, 108.2 fluidführend mit dem Düsen-Flüssigkeitsanschluss 102 und/oder dem Düsen-Druckluftanschluss 104 verbunden werden.

### BEZUGSZEICHENLISTE (Teil der Beschreibung)

- 100: Mehrkanal-Reinigungsvorrichtung
- 102: Flüssigkeits-Düsenanschluss
- 102.1-4: erster bis vierter Flüssigkeits-Düsenanschluss
- 104: Druckluft-Druckluftanschluss
- 104.1-4: erster bis vierter Druckluft-Druckluftanschluss
- 106: Kombination-Düsenanschluss
- 106.1-4: erster bis vierter Kombination-Düsenanschluss
- 108: Düsenanschlussleitung
- 108.1-4: erste bis vierte Düsenanschlussleitung
- 108A: Druckluft-Düsenanschlussleitung
- 108.1-4A: erste bis vierte Druckluft-Düsenanschlussleitung
- 108B: Flüssigkeits-Düsenanschlussleitung
- 108.1-4B: erste bis vierte Flüssigkeits-Düsenanschlussleitung
- 200: Sensorreinigungsmodul
- 210: Modulsteuereinheit
- 214: Pumpensteuerleitung
- 214.1-4: erste bis vierte Pumpensteuerleitung
- 216: Ventilsteuerleitung
- 216.1-4: erste bis vierte Ventilsteuerleitung
- 272: Moduldruckluftanschluss
- 273: Druckluft-Anschlussleitung
- 273.1-4: erste bis vierte Druckluft-Anschlussleitung
- 278: Druckluft-Düsenleitung
- 290: Modulgehäuse
- 300: Sensoroberfläche
- 300.1-4: erste bis vierte Sensoroberfläche
- 301: Sensor
- 301.1-4: erster bis vierter Sensor
- 305: Sensorsignal
- 305.1, 305.2: erstes, zweites Sensorsignal
- 306: Sensorleitung
- 306.1, 306.2: erste, zweite Sensorleitung
- 307: Reinigungsprüfsignal
- 307.1, 307.2: erstes, zweites Reinigungsprüfsignal
- 320: Reinigungsdüse
- 320.1-4: erste bis vierte Reinigungsdüse
- 341: Druckluftpuffer
- 400: Flüssigkeitsquelle
- 512: elektrische Pumpe
- 514: Waschwasserpumpe
- 530: Zentralpumpeinheit
- 532: Pumpenmodul
- 520: Düsenstrang
- 520.1-4: erster bis vierter Düsenstrang
- 590: Modulsteueranschluss
- 592: Pumpensteueranschluss
- 592.1-4: erster bis vierter Pumpensteueranschluss
- 594: Ventilsteueranschluss
- 594.1-4: erster bis vierter Ventilsteueranschluss
- 596: Masseanschluss
- 598: Kombinations-Steueranschluss
- 598.1-4: erster bis vierter Kombinations-Steueranschluss
- 600: Druckluftquelle
- 602: Kompressor
- 604: Druckspeicher
- 606: Druckluftversorgungsanlage
- 626: Flüssigkeits-Düsenleitung
- 626.1-4: erste bis vierte Flüssigkeits-Düsenleitung
- 628: Modulflüssigkeitsleitung
- 628.1-4: erste bis vierte Modulflüssigkeitsleitung
- 629: Flüssigkeitsverteiler
- 1000: Fahrzeug
- 1002: PKW
- 1004: Nutzfahrzeug
- 1006: Anhänger
- 1020: Fahrzeugsteuereinheit
- 1024: Fahrzeugsteuerleitung
- 1026: Fahrzeugbus
- 1042: Pumpensteuersignal
- 1042.1-4: erstes bis viertes Pumpensteuersignal
- 1044: Ventilsteuersignal
- 1044.1-4: erstes bis viertes Ventilsteuersignal
- 1046: Kombinations-Steuersignal
- 1046.1-4: erstes bis viertes Kombinations-Steuersignal
- 3400: Schnellentlüftungsventil
- 3401: erstes Schnellentlüftungsventil
- 3401.1: erster Anschluss des ersten Schnellentlüftungsventils
- 3401.2: zweiter Anschluss des ersten Schnellentlüftungsventils
- 3401.3: dritter Anschluss des ersten Schnellentlüftungsventils
- 3401.4: Ventilkörper des ersten Schnellentlüftungsventils
- 3401.5: Schnellentlüftungsventil-Steuerleitung des ersten Schnellentlüftungsventils
- 3402: zweites Schnellentlüftungsventil
- 3402.1: erster Anschluss des zweiten Schnellentlüftungsventils
- 3402.2: zweiter Anschluss des zweiten Schnellentlüftungsventils
- 3402.3: dritter Anschluss des zweiten Schnellentlüftungsventils
- 3402.4: Ventilkörper des zweiten Schnellentlüftungsventils
- 3402.5: Schnellentlüftungsventil-Steuerleitung des zweiten Schnellentlüftungsventils
- 3403: drittes Schnellentlüftungsventil
- 3403.1: erster Anschluss des dritten Schnellentlüftungsventils
- 3403.2: zweiter Anschluss des dritten Schnellentlüftungsventils
- 3403.3: dritter Anschluss des dritten Schnellentlüftungsventils
- 3403.4: Ventilkörper des dritten Schnellentlüftungsventils
- 3403.5: Schnellentlüftungsventil-Steuerleitung des dritten Schnellentlüftungsventils
- 3404: viertes Schnellentlüftungsventil
- 3404.1: erster Anschluss des vierten Schnellentlüftungsventils
- 3404.2: zweiter Anschluss des vierten Schnellentlüftungsventils
- 3404.3: dritter Anschluss des vierten Schnellentlüftungsventils
- 3404.4: Ventilkörper des vierten Schnellentlüftungsventils
- 3404.5: Schnellentlüftungsventil-Steuerleitung des vierten Schnellentlüftungsventils
- 3600: Strangventil
- 3601: erstes Strangventil
- 3601.1: erster Anschluss des ersten Strangventils
- 3601.2: zweiter Anschluss des ersten Strangventils
- 3601.3: Entlüftungsanschluss des ersten Strangventils
- 3601A: Entlüftungsstellung des ersten Strangventils
- 3601B: Belüftungsstellung des ersten Strangventils
- 3602: zweites Strangventil
- 3602.1: erster Anschluss des zweiten Strangventils
- 3602.2: zweiter Anschluss des zweiten Strangventils
- 3602.3: Entlüftungsanschluss des zweiten Strangventils
- 3602A: Entlüftungsstellung des zweiten Strangventils
- 3602B: Belüftungsstellung des zweiten Strangventils
- 3603: drittes Strangventil
- 3603.1: erster Anschluss des dritten Strangventils
- 3603.2: zweiter Anschluss des dritten Strangventils
- 3603.3: Entlüftungsanschluss des dritten Strangventils
- 3603A: Entlüftungsstellung des dritten Strangventils
- 3603B: Belüftungsstellung des dritten Strangventils
- 3604: viertes Strangventil
- 3604.1: erster Anschluss des vierten Strangventils
- 3604.2: zweiter Anschluss des vierten Strangventils
- 3604.3: Entlüftungsanschluss des vierten Strangventils
- 3604A: Entlüftungsstellung des vierten Strangventils
- 3604B: Belüftungsstellung des vierten Strangventils
- 3620: 2/2 Wegeventil
- 3620A: Sperrstellung des 2/2 Wegeventils
- 3620B: Öffnungsstellung des 2/2 Wegeventils
- 3640: 2/2-Wege-Magnetventil
- 3660: 3/2-Wegeventil
- 3680: 3/2-Wege-Magnetventil
- DL: Druckluft
- DRI: Druckluft-Reinigungsimpuls
- DRI1-4: erster bis vierter Druckluft-Reinigungsimpuls
- F: Reinigungsflüssigkeit
- PF: Förderdruck
- PF1-4: erster bis vierter Förderdruck
- SD: Druckluftströmung
- SD1-4: erste bis vierte Druckluftströmung
- SF: Flüssigkeitsströmung
- SF1-4: erste bis vierte Flüssigkeitsströmung

## Patentansprüche

1. Mehrkanal-Reinigungsvorrichtung (100) zum Bereitstellen von einer Flüssigkeitsströmung (SF) und/oder einer Druckluftströmung (SD) für eine Anzahl von Reinigungsdüsen (320), aufweisend:
- einen Moduldruckluftanschluss (272) zum Annehmen von Druckluft (DL),
- einen Modulflüssigkeitsanschluss (618) zum Annehmen von Reinigungsflüssigkeit (F),
**gekennzeichnet durch**
- mindestens zwei Düsenstränge (520, 520.1, 520.2, 520.3, 520.4), wobei ein Düsenstrang (520, 520.1, 520.2, 520.3, 520.4) ausgebildet ist zum Versorgen mindestens einer Reinigungsdüse (320, 320.1, 320.2, 320.3, 320.4) unabhängig von einem anderen Düsenstrang (520, 520.1, 520.2, 520.3, 520.4), wobei jeder Düsenstrang (520, 520.1, 520.2, 520.3, 520.4) aufweist:
- eine Pumpe (5100, 5101, 5102, 5103, 5104), ausgebildet zum Fördern einer Reinigungsflüssigkeit (F) von einer am Modulflüssigkeitsanschluss (618), insbesondere drucklos, bereitgestellten Reinigungsflüssigkeit (F) in Abhängigkeit eines Pumpensteuersignals (1042, 1042.1, 1042.2, 1042.3, 1042.4) und zum Bereitstellen der geförderten Reinigungsflüssigkeit (F) in Form einer Flüssigkeitsströmung (SF, SF1, SF2, SF3, SF4 an einer Flüssigkeits-Düsenleitung (626, 626.1, 626.2, 626.3, 626.4) des Düsenstrangs (520, 520.1, 520.2, 520.3, 520.4),
- ein Strangventil (3600, 3601, 3602, 3603, 3604), ausgebildet zum pneumatischen Verbinden des Moduldruckluftanschlusses (272) mit einer Druckluft-Düsenleitung (278, 278.1, 278.2, 278.3, 278.4) des Düsenstrangs (520, 520.1, 520.2, 520.3, 520.4) in Abhängigkeit eines Ventilsteuersignals (1044, 1044.1, 1044.2, 1044.3, 1044.4) zum Bereitstellen einer Druckluftströmung (SD) an der Druckluft-Düsenleitung (278, 278.1, 278.2, 278.3, 278.4) in einer Belüftungsstellung (3600A).

2. Mehrkanal-Reinigungsvorrichtung (100) nach Anspruch 1, **dadurch gekennzeichnet, dass** die Pumpe (510) als elektrische Pumpe (512), insbesondere als Waschwasserpumpe (514), ausgebildet ist.

3. Mehrkanal-Reinigungsvorrichtung (100) nach Anspruch 1 oder 2, **dadurch gekennzeichnet, dass** das Strangventil (3600) als 2/2-Wegeventil (3620), insbesondere als 2/2-Wege-Magnetventil (3640) ausgebildet ist.

4. Mehrkanal-Reinigungsvorrichtung (100) nach Anspruch 1 oder 2, **dadurch gekennzeichnet, dass** das Strangventil (3600) als 3/2-Wegeventil (3660), insbesondere als 3/2-Wege-Magnetventil (3680) ausgebildet ist, wobei das 3/2-Wegeventil (3660) einen Entlüftungsanschluss (3660.3) aufweist und ausgebildet ist zum Herstellen einer pneumatischen Verbindung zwischen der Druckluft-Düsenleitung (278, 278.1, 278.2, 278.3, 278.4) des Düsenstrangs (520, 520.1, 520.2, 520.3, 520.4) und dem Entlüftungsanschluss (3660.3).

5. Mehrkanal-Reinigungsvorrichtung (100) nach Anspruch 4, **dadurch gekennzeichnet, dass** in der Druckluft-Düsenleitung (278, 278.1, 278.2, 278.3, 278.4) des Düsenstrangs (520, 520.1, 520.2, 520.3, 520.4) oder in einer die Reinigungsdüse (320, 320.1, 320.2, 320.3, 320.4) mit der Druckluft-Düsenleitung (278, 278.1, 278.2, 278.3, 278.4) pneumatisch verbindenden Druckluft-Düsenanschlussleitung (108.1A, 108.2A, 108.3A, 108.4A) ein Schnellentlüftungsventil (3400, 3401, 3402, 3403, 3404) angeordnet ist, das ausgebildet ist zum Annehmen der Bypass-Druckluftströmung (SD) und zum Bereitstellen eines Druckluft-Reinigungsimpulses (DRI).

6. Mehrkanal-Reinigungsvorrichtung (100) nach einem der vorherigen Ansprüche, **dadurch gekennzeichnet, dass** in einem Düsenstrang (520, 520.1, 520.2, 520.3, 520.4) die Pumpe (5100, 5101, 5102, 5103, 5104) einen Pumpensteueranschluss (592, 592.1, 592.2, 592.3, 592.4) und das Strangventil (3600, 3601, 3602, 3603, 3604) einen Ventilsteueranschluss (594, 594.1, 594.2, 594.3, 594.4) aufweist, die insbesondere voneinander unabhängig steuerbar ausgebildet sind.

7. Mehrkanal-Reinigungsvorrichtung (100) nach einem der vorherigen Ansprüche, **dadurch gekennzeichnet, dass** die Pumpe (5100, 5101, 5102, 5103, 5104) und das Strangventil (3600, 3601, 3602, 3603, 3604) eines Düsenstrangs (520, 520.1, 520.2, 520.3, 520.4) einen gemeinsamen Kombinations-Steueranschluss (598, 598.1, 598.2, 598.3, 598.4) aufweisen, der einen Pumpensteueranschluss (592, 592.1, 592.2, 592.3, 592.4) der Pumpe (5100, 5101, 5102, 5103, 5104) und einen Ventilsteueranschluss (594, 594.1, 594.2, 594.3, 594.4) des Strangventils (3600, 3601, 3602, 3603, 3604) kombiniert und ausgebildet ist zum gemeinsamen Ansteuern der Pumpe (5100, 5101, 5102, 5103, 5104) und des Strangventils (3600, 3601, 3602, 3603, 3604) eines Düsenstrangs (520, 520.1, 520.2, 520.3, 520.4) mit einem einzelnen Kombinations-Steuersignal (1046, 1046.1, 1046.2, 1046.3, 1046.4).

8. Mehrkanal-Reinigungsvorrichtung (100) nach einem der vorherigen Ansprüche, **gekennzeichnet durch** eine Zentralpumpeinheit (530), in der die Pumpen (5100, 5101, 5102, 5103, 5104) sämtlicher Düsenstränge (520, 520.1, 520.2, 520.3, 520.4), insbesondere in einem Pumpenmodul (532) eingehaust, angeordnet sind.

9. Mehrkanal-Reinigungsvorrichtung (100) nach einem der vorherigen Ansprüche, **gekennzeichnet durch** einen Modulsteueranschluss (590).

10. Mehrkanal-Reinigungsvorrichtung (100) nach einem der vorherigen Ansprüche, **gekennzeichnet durch** eine Modulsteuereinheit (210), die ausgebildet ist zur Kommunikation zwischen der Mehrkanal-Reinigungsvorrichtung (100), insbesondere dem Modulsteueranschluss (590) der Mehrkanal-Reinigungsvorrichtung (100), und einer Fahrzeugsteuereinheit (1020) des Fahrzeugs (1000), insbesondere über einen Fahrzeugbus (1026).

11. Mehrkanal-Sensorreinigungsmodul (200), aufweisend ein Modulgehäuse (290), insbesondere ein Ventilpatronengehäuse (292), und eine Reinigungsvorrichtung (100) nach einem der vorherigen Ansprüche.

12. Fahrzeug (1000), insbesondere PKW (1002) oder Nutzfahrzeug (1004) oder Anhänger (1006), aufweisend mindestens eine Mehrkanal-Reinigungsvorrichtung (100) nach einem der Ansprüche 1 bis 10 und/oder ein Mehrkanal-Sensorreinigungsmodul (200) nach Anspruch 11.

## Claims

1. Multi-channel cleaning device (100) for providing a liquid flow (SF) and/or a compressed air flow (SD) for a number of cleaning jets (320), having:
- a module compressed air connection (272) for receiving compressed air (DL),
- a module liquid connection (618) for receiving cleaning liquid (F),
**characterized by**
- at least two nozzle branches (520, 520.1, 520.2, 520.3, 520.4), wherein one nozzle branch (520, 520.1, 520.2, 520.3, 520.4) is designed for supplying at least one cleaning nozzle (320, 320.1, 320.2, 320.3, 320.4) independently of another nozzle branch (520, 520.1, 520.2, 520.3, 520.4), wherein each nozzle branch (520, 520.1, 520.2, 520.3, 520.4) has:
- a pump (5100, 5101, 5102, 5103, 5104) designed for delivering a cleaning liquid (F) from a cleaning liquid (F) provided at the module liquid connection (618), in particular without pressure, as a function of a pump control signal (1042, 1042.1, 1042.2, 1042.3, 1042.4) and for providing the delivered cleaning liquid (F) in the form of a liquid flow (SF, SF1, SF2, SF3, SF4) at a liquid nozzle line (626, 626.1, 626.2, 626.3, 626.4) of the nozzle branch (520, 520.1, 520.2, 520.3, 520.4),
- a branch valve (3600, 3601, 3602, 3603, 3604) designed for pneumatically connecting the module compressed air connection (272) to a compressed air nozzle line (278, 278.1, 278.2, 278.3, 278.4) of the nozzle branch (520, 520.1, 520.2, 520.3, 520.4) as a function of a valve control signal (1044, 1044.1, 1044.2, 1044.3, 1044.4) for providing a compressed air flow (SD) at the compressed air nozzle line (278, 278.1, 278.2, 278.3, 278.4) in a ventilation position (3600A).

2. Multi-channel cleaning device (100) according to Claim 1, **characterized in that** the pump (510) is designed as an electric pump (512), in particular as a washing water pump (514).

3. Multi-channel cleaning device (100) according to Claim 1 or 2, **characterized in that** the branch valve (3600) is designed as a 2/2-way valve (3620), in particular as a 2/2-way solenoid valve (3640).

4. Multi-channel cleaning device (100) according to Claim 1 or 2, **characterized in that** the branch valve (3600) is designed as a 3/2-way valve (3660), in particular as a 3/2-way solenoid valve (3680), wherein the 3/2-way valve (3660) has a vent connection (3660.3) and is designed for establishing a pneumatic connection between the compressed air nozzle line (278, 278.1, 278.2, 278.3, 278.4) of the nozzle branch (520, 520.1, 520.2, 520.3, 520.4) and the vent connection (3660.3).

5. Multi-channel cleaning device (100) according to Claim 4, **characterized in that** a quick vent valve (3400, 3401, 3402, 3403, 3404) is arranged in the compressed air nozzle line (278, 278.1, 278.2, 278.3, 278.4) of the nozzle branch (520, 520.1, 520.2, 520.3, 520.4) or in a compressed air nozzle connection line (108.1A, 108.2A, 108.3A, 108.4A) pneumatically connecting the cleaning nozzle (320, 320.1, 320.2, 320.3, 320.4) to the compressed air nozzle line (278, 278.1, 278.2, 278.3, 278.4), the quick vent valve (3400, 3401, 3402, 3403, 3404) being designed for receiving the bypass compressed air flow (SD) and for providing a compressed air cleaning pulse (DRI).

6. Multi-channel cleaning device (100) according to one of the preceding claims, **characterized in that**, in a nozzle branch (520, 520.1, 520.2, 520.3, 520.4), the pump (5100, 5101, 5102, 5103, 5104) has a pump control connection (592, 592.1, 592.2, 592.3, 592.4) and the branch valve (3600, 3601, 3602, 3603, 3604) has a valve control connection (594, 594.1, 594.2, 594.3, 594.4), which are designed, in particular, to be controllable independently of one another.

7. Multi-channel cleaning device (100) according to one of the preceding claims, **characterized in that** the pump (5100, 5101, 5102, 5103, 5104) and the branch valve (3600, 3601, 3602, 3603, 3604) of a nozzle branch (520, 520.1, 520.2, 520.3, 520.4) have a common combination control connection (598, 598.1, 598.2, 598.3, 598.4), which combines a pump control connection (592, 592.1, 592.2, 592.3, 592.4) of the pump (5100, 5101, 5102, 5103, 5104) and a valve control connection (594, 594.1, 594.2, 594.3, 594.4) of the branch valve (3600, 3601, 3602, 3603, 3604) and is designed for jointly activating the pump (5100, 5101, 5102, 5103, 5104) and the branch valve (3600, 3601, 3602, 3603, 3604) of a nozzle branch (520, 520.1, 520.2, 520.3, 520.4) with a single combination control signal (1046, 1046.1, 1046.2, 1046.3, 1046.4).

8. Multi-channel cleaning device (100) according to one of the preceding claims, **characterized by** a central pump unit (530), in which the pumps (5100, 5101, 5102, 5103, 5104) of all nozzle branches (520, 520.1, 520.2, 520.3, 520.4) are arranged, in particular housed in a pump module (532).

9. Multi-channel cleaning device (100) according to one of the preceding claims, **characterized by** a module control connection (590).

10. Multi-channel cleaning device (100) according to one of the preceding claims, **characterized by** a module control unit (210), which is designed for communication between the multi-channel cleaning device (100), in particular the module control connection (590) of the multi-channel cleaning device (100), and a vehicle control unit (1020) of the vehicle (1000), in particular via a vehicle bus (1026).

11. Multi-channel sensor cleaning module (200), including a module housing (290), in particular a valve cartridge housing (292), and a cleaning device (100) according to one of the preceding claims.

12. Vehicle (1000), in particular a passenger car (1002) or a commercial vehicle (1004) or a trailer (1006), including at least one multi-channel cleaning device (100) according to one of Claims 1 to 10 and/or a multi-channel sensor cleaning module (200) according to Claim 11.

## Revendications

1. Dispositif de nettoyage à canaux multiples (100) permettant de fournir un flux de liquide (SF) et/ou un flux d'air comprimé (SD) pour un certain nombre de buses de nettoyage (320), présentant :
- un raccord d'air comprimé modulaire (272) pour recevoir de l'air comprimé (DL),
- un raccord de liquide modulaire (618) pour recevoir du liquide de nettoyage (F),
**caractérisé par**
- au moins deux branches de buses (520, 520.1, 520.2, 520.3, 520.4), une branche de buses (520, 520.1, 520.2, 520.3, 520.4) étant réalisée pour alimenter au moins une buse de nettoyage (320, 320.1, 320.2, 320.3, 320.4) indépendamment d'une autre branche de buses (520, 520.1, 520.2, 520.3, 520.4), chaque branche de buses (520, 520.1, 520.2, 520.3, 520.4) présentant :
- une pompe (5100, 5101, 5102, 5103, 5104), réalisée pour refouler un liquide de nettoyage (F), notamment un liquide de nettoyage (F) fourni, en particulier sans pression, au niveau du raccord de liquide modulaire (618), en fonction d'un signal de commande de pompe (1042, 1042.1, 1042.2, 1042.3, 1042.4), et pour fournir le liquide de nettoyage (F) refoulé sous la forme d'un flux de liquide (SF, SF1, SF2, SF3, SF4) au niveau d'une conduite de buse de liquide (626, 626.1, 626.2, 626.3, 626.4) de la branche de buses (520, 520.1, 520.2, 520.3, 520.4),
- une vanne de branche (3600, 3601, 3602, 3603, 3604), réalisée pour le raccordement pneumatique du raccord d'air comprimé modulaire (272) à une conduite de buse d'air comprimé (278, 278.1, 278.2, 278.3, 278.4) de la branche de buses (520, 520.1, 520.2, 520.3, 520.4) en fonction d'un signal de commande de vanne (1044, 1044.1, 1044.2, 1044.3, 1044.4) pour fournir un flux d'air comprimé (SD) au niveau de la conduite de buse d'air comprimé (278, 278.1, 278.2, 278.3, 278.4) dans une position d'aération (3600A).

2. Dispositif de nettoyage à canaux multiples (100) selon la revendication 1, **caractérisé en ce que** la pompe (510) est réalisée sous forme de pompe électrique (512), en particulier de pompe à eau de lavage (514).

3. Dispositif de nettoyage à canaux multiples (100) selon la revendication 1 ou 2, **caractérisé en ce que** la vanne de branche (3600) est réalisée sous forme de vanne 2/2 voies (3620), en particulier d'électrovanne 2/2 voies (3640).

4. Dispositif de nettoyage à canaux multiples (100) selon la revendication 1 ou 2, **caractérisé en ce que** la vanne de branche (3600) est réalisée sous forme de vanne 3/2 voies (3660), en particulier d'électrovanne 3/2 voies (3680), dans lequel la vanne 3/2 voies (3660) présente un raccord de purge (3660.3) et est réalisée pour établir un raccordement pneumatique entre la conduite de buse d'air comprimé (278, 278.1, 278.2, 278.3, 278.4) de la branche de buses (520, 520.1, 520.2, 520.3, 520.4) et le raccord de purge (3660.3).

5. Dispositif de nettoyage à canaux multiples (100) selon la revendication 4, **caractérisé en ce que** dans la conduite de buse d'air comprimé (278, 278.1, 278.2, 278.3, 278.4) de la branche de buses (520, 520.1, 520.2, 520.3, 520.4) ou dans une conduite de raccord de buse d'air comprimé (108.1A, 108.2A, 108.3A, 108.4A) raccordant de manière pneumatique la buse de nettoyage (320, 320.1, 320.2, 320.3, 320.4) à la conduite de buse d'air comprimé (278, 278.1, 278.2, 278.3, 278.4) est disposée une vanne de purge rapide (3400, 3401, 3402, 3403, 3404) qui est réalisée pour recevoir le flux d'air comprimé de dérivation (SD) et pour fournir une impulsion de nettoyage par air comprimé (DRI).

6. Dispositif de nettoyage à canaux multiples (100) selon l'une quelconque des revendications précédentes, **caractérisé en ce que** dans une branche de buses (520, 520.1, 520.2, 520.3, 520.4), la pompe (5100, 5101, 5102, 5103, 5104) présente un raccord de commande de pompe (592, 592.1, 592.2, 592.3, 592.4) et la vanne de branche (3600, 3601, 3602, 3603, 3604) présente un raccord de commande de vanne (594, 594.1, 594.2, 594.3, 594.4) qui sont réalisés en particulier de manière à pouvoir être commandés indépendamment l'un de l'autre.

7. Dispositif de nettoyage à canaux multiples (100) selon l'une quelconque des revendications précédentes, **caractérisé en ce que** la pompe (5100, 5101, 5102, 5103, 5104) et la vanne de branche (3600, 3601, 3602, 3603, 3604) d'une branche de buses (520, 520.1, 520.2, 520.3, 520.4) présentent un raccord de commande combiné commun (598, 598.1, 598.2, 598.3, 598.4) qui combine un raccord de commande de pompe (592, 592.1, 592.2, 592.3, 592.4) de la pompe (5100, 5101, 5102, 5103, 5104) et un raccord de commande de vanne (594, 594.1, 594.2, 594.3, 594.4) de la vanne de branche (3600, 3601, 3602, 3603, 3604), et qui est réalisé pour le pilotage commun de la pompe (5100, 5101, 5102, 5103, 5104) et de la vanne de branche (3600, 3601, 3602, 3603, 3604) d'une branche de buses (520, 520.1, 520.2, 520.3, 520.4) par un seul signal de commande combiné (1046, 1046.1, 1046.2, 1046.3, 1046.4).

8. Dispositif de nettoyage à canaux multiples (100) selon l'une quelconque des revendications précédentes, **caractérisé par** une unité de pompage centrale (530) dans laquelle sont disposées les pompes (5100, 5101, 5102, 5103, 5104) de toutes les branches de buses (520, 520.1, 520.2, 520.3, 520.4), en particulier logées dans un module de pompage (532).

9. Dispositif de nettoyage à canaux multiples (100) selon l'une quelconque des revendications précédentes, **caractérisé par** un raccord de commande modulaire (590).

10. Dispositif de nettoyage à canaux multiples (100) selon l'une quelconque des revendications précédentes, **caractérisé par** une unité de commande modulaire (210) qui est réalisée pour la communication entre le dispositif de nettoyage à canaux multiples (100), en particulier le raccord de commande modulaire (590) du dispositif de nettoyage à canaux multiples (100), et une unité de commande de véhicule (1020) du véhicule (1000), en particulier par l'intermédiaire d'un bus de véhicule (1026).

11. Module de nettoyage de capteur à canaux multiples (200), présentant un boîtier modulaire (290), en particulier un boîtier de cartouche de vanne (292), et un dispositif de nettoyage (100) selon l'une quelconque des revendications précédentes.

12. Véhicule (1000), en particulier voiture particulière (1002) ou véhicule utilitaire (1004) ou remorque (1006), présentant au moins un dispositif de nettoyage à canaux multiples (100) selon l'une quelconque des revendications 1 à 10 et/ou un module de nettoyage de capteur à canaux multiples (200) selon la revendication 11.
